# EUROPÄISCHE PATENTANMELDUNG

(11) **EP 3 222 500 A1**
(43) Veröffentlichungstag der Anmeldung: **27.09.2017**
(21) Anmeldenummer: 16162371.5
(22) Anmeldetag: 24.03.2016
(51) Int. Cl.: B62D 55/14, B62D 55/15, B62D 55/30, B60G 5/04, B62D 55/104

(54) **KETTENLAUFWERK UND ZIVILES KETTENFAHRZEUG**

(71) Anmelder: Kässbohrer Geländefahrzeug AG, 88471 Laupheim (DE)
(72) Erfinder: Junginger, Bernd, 89134 Blaustein-Bermaringen (DE); Mayer, Stephan, 79853 Lenzkirch (DE); Kuhn, Michael, 88480 Achstetten (DE)
(74) Vertreter: Patentanwälte Ruff, Wilhelm, Beier, Dauster & Partner mbB

(57) **Zusammenfassung**

Kettenlaufwerk (3) für ein Kettenfahrwerk eines zivilen Kettenfahrzeugs (1) mit einer Kettenanordnung (5), die umlaufend über ein endseitiges Antriebsrad (9), ein gegenüberliegendes Spannrad (6) sowie über mehrere Laufräder (7, 8) geführt ist, wobei eine Spannradaufhängung und eine zu der Spannradaufhängung benachbarte Laufradaufhängung mittels einer Koppelmechanik miteinander in Wirkverbindung sind, wobei die Spannradaufhängung und die Laufradaufhängung jeweils eine eigene Schwenkachse (12, 22) aufweisen, die zueinander beabstandet sind.

## Beschreibung

Die Erfindung betrifft ein Kettenlaufwerk für ein Kettenfahrwerk eines zivilen Kettenfahrzeugs mit einer Kettenanordnung, die umlaufend über ein endseitiges Antriebsrad, ein gegenüberliegendes Spannrad sowie über mehrere Laufräder geführt ist, wobei eine Spannradaufhängung und eine zu der Spannradaufhängung benachbarte Laufradaufhängung mittels einer Koppelmechanik miteinander in Wirkverbindung sind. Die Erfindung betrifft zudem ein ziviles Kettenfahrzeug mit einem Tragrahmen sowie mit einem Kettenfahrwerk, das auf gegenüberliegenden Seiten des Tragrahmens jeweils ein Kettenlaufwerk aufweist.

Ein ziviles Kettenfahrzeug mit einem derartigen Kettenlaufwerk ist aus der EP 1 318 067 A2 bekannt. Das zivile Kettenfahrzeug ist zur Personenbeförderung vorgesehen und weist ein Kettenfahrwerk auf, das zwei Kettenlaufwerke umfasst. Jedes Kettenlaufwerk weist eine umlaufende Kettenanordnung auf, die um ein frontseitiges Spannrad sowie um ein heckseitiges Antriebsrad umgelenkt ist. Das Spannrad ist mittels einer Spannradaufhängung an einem Tragrahmen des Kettenfahrzeugs schwenkbar gelagert, die einen Spannradlenker aufweist. Das zu dem Spannrad benachbarte Laufrad ist an einem Laufradlenker drehbar gelagert, der koaxial zu dem Spannradlenker relativ zu dem Tragrahmen schwenkbeweglich gelagert ist. Zwischen dem Spannradlenker und dem Laufradlenker erstreckt sich ein Linearstellglied, das eine starre, einstellbare Zuordnung zwischen dem Spannradlenker und dem Laufradlenker definiert. Die Einheit aus Spannradlenker, Laufradlenker und Linearstellglied ist um die gemeinsame Schwenkachse relativ zum Tragrahmen schwenkbeweglich gelagert. Elastische Rückstellmittel stellen das so gebildete Spannpendel in eine Ausgangslage zurück, sofern nicht äußere Kräfte auf das Laufrad oder das Spannrad wirken.

Aufgabe der Erfindung ist es, ein Kettenlaufwerk sowie ein ziviles Kettenfahrzeug der eingangs genannten Art zu schaffen, die einen verbesserten Fahrkomfort ermöglichen.

Diese Aufgabe wird für das Kettenlaufwerk dadurch gelöst, dass die Spannradaufhängung und die Laufradaufhängung jeweils eine eigene Schwenkachse aufweisen, die zueinander beabstandet sind. Dadurch wird ein Kettenlaufwerk geschaffen, das es auch für schwere zivile Kettenfahrzeuge mit einem Fahrzeuggewicht von etwa 25 bis 30 Tonnen (t) ermöglicht, relativ hohe Fahrgeschwindigkeiten von mindestens 25 km/h zu erzielen. Durch die erfindungsgemäße Lösung werden Lostrums in der Kettenanordnung bei einem Bremsvorgang oder bei einem Überfahren eines Hindernisses vermieden. Durch die Separierung der Spannradaufhängung und der Laufradaufhängung mittels jeweils einer eigenen Schwenkachse, die zueinander beabstandet sind, und durch die mechanische Kopplung der Spannradaufhängung und der Laufradaufhängung wird eine gegenseitige Abstützung der beiden Aufhängungen bei entsprechenden Belastungen auf die eine oder die andere Aufhängung erzielt, wodurch im Fahrbetrieb schlaffe Bereiche der Kettenanordnung, d.h. Lostrums der Kettenanordnung, vermieden werden. Es ergibt sich eine Bremsnickabstützung, d.h. ein Einnicken des Kettenfahrwerks und des Kettenfahrzeugs bei einem Bremsen wird vermieden. Die Koppelmechanik kann als starres Koppelgelenk oder auch als verstellbares Koppelgelenk ausgeführt sein. Bei Ausführung als verstellbares Koppelgelenk, d.h. als verstellbare Koppelmechanik ergibt sich zusätzlich eine Spannfunktion für die Kettenanordnung. Es wird dann von einer verstellbaren Spanneinrichtung gesprochen, die die Koppelmechanik aufweist.

Sowohl die Spannradaufhängung als auch die Laufradaufhängung weisen jeweils einen auch als Lenker bezeichneten Schwenkarm auf, der um die jeweilige Schwenkachse schwenkbar gelagert ist, und der jeweils das Spannrad bzw. das Laufrad trägt. Die Koppelmechanik verbindet die beiden Lenker miteinander. In vorteilhafter Weise sind die beiden Schwenkachsen - auf einen montierten Zustand des Kettenlaufwerks an dem Kettenfahrzeug bezogen - in Fahrzeuglängsrichtung zueinander beabstandet. Zusätzlich können die beiden Schwenkachsen auch noch in Fahrzeughochrichtung zueinander beabstandet sein, wobei vorzugsweise der Abstand in Fahrzeuglängsrichtung größer ist als der Abstand in Fahrzeughochrichtung. Damit erstreckt sich die Koppelmechanik mit ihrer Hauptrichtungskomponente in Fahrzeuglängsrichtung. Die Richtungsangaben verstehen sich auf eine unbelastete Ausgangslage des Kettenlaufwerks, d.h. aufstehend auf einem ebenen Untergrund.

In Ausgestaltung der Erfindung weist die Spannradaufhängung einen Spannradlenker auf, der um eine erste Schwenkachse schwenkbeweglich gelagert ist und an dem das Spannrad in Abstand zu der Schwenkachse um eine parallele erste Drehachse drehbar gelagert ist, dass die Laufradaufhängung einen Laufradlenker aufweist, der um eine zu der ersten Schwenkachse des Spannradlenkers parallele zweite Schwenkachse schwenkbeweglich gelagert ist, wobei das Laufrad an dem Laufradlenker in Abstand zu der zweiten Schwenkachse um eine parallele zweite Drehachse drehbar gelagert ist, und dass die Spanneinrichtung ein Linearstellglied aufweist, das an dem Spannradlenker einerseits und an dem Laufradlenker andererseits in Gelenkpunkten angreift, die zu den ersten und zweiten Schwenkachsen beabstandet sind. Die erfindungsgemäße Lösung ermöglicht eine gegenüber dem Stand der Technik erheblich verbesserte Einstellbarkeit einer Kettenspannung der Kettenanordnung sowie eine Relativbeweglichkeit zwischen dem Spannradlenker und dem Laufradlenker. Das erfindungsgemäße Kettenlaufwerk ermöglicht höhere Fahrgeschwindigkeiten eines zivilen Kettenfahrzeugs in unwegsamem Gelände bis wenigstens 25 km/h. Wesentlich für die erfindungsgemäße Lösung ist es, dass sowohl das Spannrad als auch das benachbarte Laufrad um voneinander unabhängige, zueinander beabstandete Schwenkachsen verschwenkbar sind, wobei sich in Verbindung mit dem Linearstellglied der Spanneinrichtung insbesondere ein einstellbares Viergelenk ergibt. Denn eine Verstellung des Linearstellgliedes führt zu einer Veränderung des Abstandes der beiden Gelenkpunkte zueinander und demzufolge zu einer Verstellung zwischen dem Spannradlenker und dem Laufradlenker. Die erfindungsgemäße Lösung eignet sich für den Einsatz bei zivilen Kettenfahrzeugen, die als Arbeitsfahrzeuge insbesondere zum Bau und zur Wartung von Pipelines, zum Bau oder zur Wartung von Strom- oder Telefonleitungen und für ähnliche Arbeitszwecke in unwegsamem Gelände ausgestaltet sind. Als Linearstellglied kann ein fluidbetätigter Stellzylinder oder auch ein Gewindespindeltrieb vorgesehen sein. Der Gewindespindeltrieb ist vorzugsweise elektrisch betrieben.

In weiterer Ausgestaltung der Erfindung sind die Gelenkpunkte zu den ersten und zweiten Drehachsen des Spannrads und des Laufrads beabstandet. Dadurch ergeben sich besonders gute Hebelverhältnisse für eine Einstellung des Wirkverhältnisses zwischen Spannradlenker und Laufradlenker durch entsprechende Linearverstellung des Linearstellgliedes.

In weiterer Ausgestaltung der Erfindung ist das Linearstellglied als hydraulischer Stellzylinder gestaltet. Der hydraulische Stellzylinder ist Teil einer Fahrzeughydraulik des Kettenfahrzeugs und kann über eine hydraulische Kettenfahrwerksteuerung gesteuert werden.

In weiterer Ausgestaltung der Erfindung ist der Gelenkpunkt des Laufradlenkers an einem Hebelfortsatz vorgesehen, der entgegengesetzt zu einem Hebelarm für das Laufrad relativ zu der zweiten Schwenkachse des Laufradlenkers abragt. Dadurch ist es möglich, günstige Hebelverhältnisse für das Angreifen der Spanneinrichtung zu erzielen.

In weiterer Ausgestaltung der Erfindung greift der Gelenkpunkt des Spannradlenkers an einem Hebelfortsatz an, der in Verlängerung eines Hebelarms für das Spannrad vorgesehen ist. In vorteilhafter Weise ist der Gelenkpunkt des Spannradlenkers in größerem radialem Abstand zu der ersten Schwenkachse des Spannradlenkers vorgesehen als die erste Drehachse für das Spannrad. Der Gelenkpunkt des Laufradlenkers an dem Hebelfortsatz hingegen ist in wesentlich geringerem radialem Abstand zu der zweiten Schwenkachse des Laufradlenkers im Verhältnis zu dem radialen Abstand der zweiten Drehachse des Laufrads relativ zu der zweiten Schwenkachse des Laufradlenkers vorgesehen.

In weiterer Ausgestaltung der Erfindung bilden das Linearstellglied und der Spannradlenker oder der Laufradlenker zusammen mit der ersten oder zweiten Schwenkachse eine Kniehebelanordnung. Aufgrund der beiden Gelenkpunkte, die die Angriffspunkte für das Linearstellglied darstellen, jeweils in radialem Abstand zu der entsprechenden ersten und zweiten Schwenkachse ergibt sich funktional eine doppelte Kniehebelanordnung.

In weiterer Ausgestaltung der Erfindung sind wenigstens vier weitere Laufräder vorgesehen, die jeweils paarweise aufgehängt sind über zwei um eine gemeinsame dritte Schwenkachse koaxial schwenkbeweglich gelagerte Laufradlenker, die relativ zueinander begrenzt schwenkbeweglich sind. Jeweils zwei Laufräder bilden demzufolge ein Laufradpaar. Die beiden Laufradlenker des Laufradpaars sind um die gemeinsame dritte Schwenkachse nach Art eines Pendels gemeinsam schwenkbeweglich gelagert, wobei die beiden Laufradlenker entgegengesetzt zueinander abragen. Ergänzend sind die beiden Laufradlenker derart aufgehängt und gelagert, dass die beiden Laufradlenker relativ zueinander eine begrenzte Schwenkbeweglichkeit durchführen können. Die beiden Laufradlenker jedes Laufradpaars sind demzufolge zum einen gemeinsam um die fahrzeugfeste dritte Schwenkachse gleichsinnig schwenkbeweglich. Zusätzlich sind die beiden Laufradlenker relativ zueinander insbesondere gegensinnig schwenkbeweglich. In einer Ausgangslage, in der die Laufradlenker gemeinsam pendelnd um die dritte Schwenkachse schwenkbeweglich sind, liegen die Laufradlenker über Anschläge aneinander an. Bei einer Relativbewegung der Laufradlenker zueinander werden die Laufradlenker relativ zueinander gegenüber diesen Anschlägen, d.h. gegenüber der Ausgangslage, ausgelenkt.

In weiterer Ausgestaltung der Erfindung sind die beiden Laufradlenker jedes Laufradpaars mittels einer Federeinrichtung gegensinnig zueinander drehmomentbeaufschlagt. Die Federeinrichtung kann als mechanische Federeinheit aus einer oder aus mehreren linearen Zug- oder Druckfedern, aus wenigstens einer Schenkelfeder oder einer Torsionsfeder gebildet sein. Alternativ kann die Federeinrichtung pneumatisch oder hydraulisch als entsprechende Dämpfungsfeder ausgeführt sein. Besonders vorteilhaft ist die Federeinrichtung als Drehstabfeder ausgeführt, die relativ zu den beiden Laufradlenkern abgestützt ist. Die Drehstabfeder ist jedoch relativ zu der fahrzeugfesten dritten Schwenkachse frei drehbar ausgeführt, so dass durch die Drehstabfeder eine gleichsinnige Pendelbewegung der beiden Laufradlenker nicht beeinträchtigt ist.

In weiterer Ausgestaltung der Erfindung steht die Federeinrichtung mit den beiden Laufradlenkern in Wirkverbindung und gleicht Relativbewegungen zwischen den Laufradlenkern aus der Ausgangslage heraus federelastisch aus. Die Federeinrichtung wirkt demzufolge ausschließlich bei relativen Schwenkbewegungen zwischen den beiden Laufradlenkern, nicht aber bei einer gemeinsamen Pendelbewegung der beiden Laufradlenker um die dritte Schwenkachse.

Für das zivile Kettenfahrzeug der eingangs genannten Art wird die der Erfindung zugrunde liegende Aufgabe dadurch gelöst, dass jedes Kettenlaufwerk mit den erfindungsgemäßen Merkmalen oder den Merkmalen gemäß den zuvor beschriebenen Ausgestaltungen versehen ist. Ein derartiges ziviles Kettenfahrzeug ist vorteilhaft als Arbeitsfahrzeug einsetzbar, wie es zuvor bereits beschrieben wurde.

In Ausgestaltung des Kettenfahrzeugs weist jedes Kettenlaufwerk zwei in Fahrzeuglängsrichtung zueinander beabstandete Laufradpaare auf. Damit ergeben sich für jedes Kettenlaufwerk des Kettenfahrzeugs insgesamt fünf Laufräder, wodurch sich eine relativ große Laufruhe des Kettenlaufwerks ergibt. Zudem ergibt sich eine relativ große Kettenaufstandslänge, die eine relativ geringe Flächenpressung ermöglicht, so dass auch schwere Kettenfahrzeuge in unwegsamem Gelände noch manövrierbar sind.

In weiterer Ausgestaltung der Erfindung sind die Spannradaufhängung frontseitig und das Antriebsrad rückseitig des Kettenlaufwerks angeordnet. Dies ist vorteilhaft, um eine gute Geländegängigkeit des Kettenfahrzeugs zu ermöglichen. Das Antriebsrad ist gegenüber entsprechenden Laufradachsen der Laufräder nach oben hochgesetzt. Auch das Spannrad ist gegenüber den Laufradachsen hochgesetzt, so dass sich ein trapezförmiges Kettenlaufwerk ergibt. Das Antriebsrad ist stationär relativ zu einem Tragrahmen des Kettenfahrzeugs drehbar gelagert.

In weiterer Ausgestaltung der Erfindung, bei der das Kettenfahrzeug mit einem frontseitig auf dem Tragrahmen angeordneten Fahrerhaus versehen ist, ist auf dem Tragrahmen hinter dem Fahrerhaus ein Aufbaurahmen angeordnet, der um wenigstens eine Kippachse kippbar relativ zu dem Tragrahmen gelagert ist. Der Aufbaurahmen dient dazu, unterschiedliche Aufbauten zu befestigen, die je nach Arbeitseinsatz für das Kettenfahrzeug benötigt werden. Die Kippbarkeit des Aufbaurahmens erleichtert Wartung und Reparatur des Kettenfahrzeugs, indem eine einfache Zugänglichkeit zu dem unter dem Aufbaurahmen positionierten Tragrahmen erzielt wird. Vorzugsweise ist der Aufbaurahmen um eine in Fahrzeugquerrichtung erstreckte, heckseitig an dem Aufbaurahmen angeordnete Kippachse an dem Tragrahmen kippbeweglich gelagert. Alternativ kann eine Kippachse in Fahrzeuglängsrichtung im Bereich einer Längsseite des Aufbaurahmens vorgesehen sein. Schließlich kann alternativ oder ergänzend der Aufbaurahmen auch um eine frontseitig in Fahrzeugquerrichtung erstreckte Kippachse relativ zu dem Tragrahmen kippbar gelagert sein. Je nach Anordnung und Ausführung der Kippachse kann der Aufbaurahmen somit nach hinten und nach oben, nach vorne und nach oben oder zur Seite und nach oben gekippt werden.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in einer Seitenansicht eine Ausführungsform eines erfindungsgemäßen zivilen Kettenfahrzeugs mit einer Ausführungsform eines erfindungsgemäßen Kettenlaufwerks und
- Fig. 2: in vergrößerter, schematischer Darstellung einen Ausschnitt des Kettenlaufwerks des Kettenfahrzeugs gemäß Fig. 1.

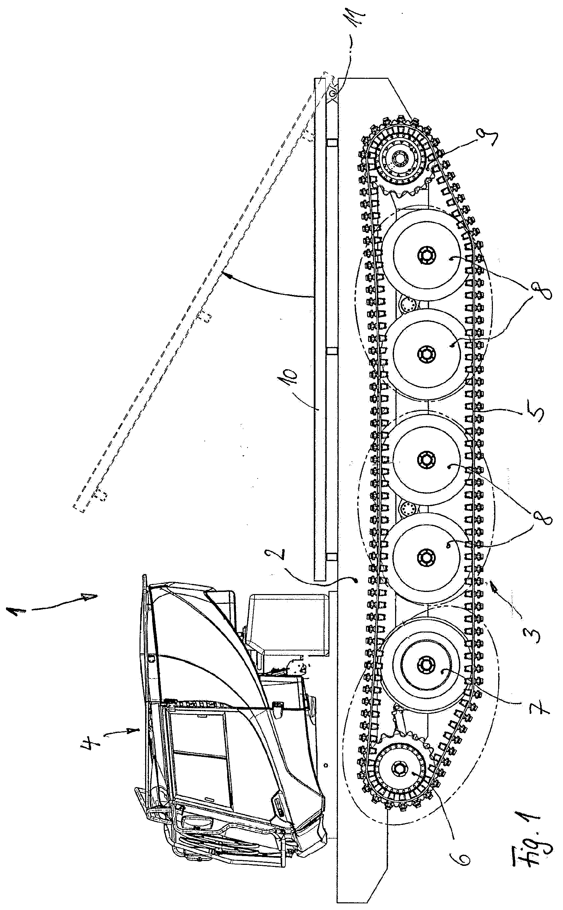

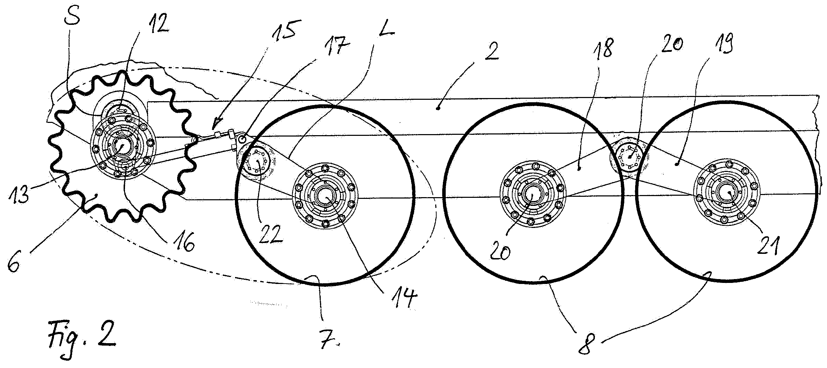

Ein ziviles Kettenfahrzeug 1 nach den Fig. 1 und 2 ist als Arbeitsfahrzeug vorgesehen, um in unwegsamem Gelände den Bau, die Wartung oder Reparatur von Pipelines, von Strom- oder Telefonleitungen oder ähnlichen Arbeiten vorzunehmen. Das Kettenfahrzeug 1 weist einen Tragrahmen 2 auf, in dem ein Verbrennungsmotor in Form eines Dieselmotors sowie eine Vielzahl von Komponenten einer Fahrzeughydraulik untergebracht sind. Die Fahrzeughydraulik umfasst eine Antriebshydraulik zum Antreiben von zwei Kettenlaufwerken 3 eines Kettenfahrwerks des Kettenfahrzeugs 1. Die Fahrzeughydraulik umfasst zudem Komponenten einer Arbeitshydraulik, die für anzubauende Arbeitsgeräte eingesetzt wird. Der Verbrennungsmotor treibt in grundsätzlich bekannter Weise wenigstens eine zentrale hydraulische Verstellpumpe an, die die Fahrzeughydraulik versorgt. Die beiden Kettenlaufwerke 3 sind auf gegenüberliegenden Seiten an dem Tragrahmen 2 in nachfolgend näher beschriebener Weise angeordnet. Der Tragrahmen 2 weist zudem in einem vorderen Bereich einen Befestigungsabschnitt zur Anordnung eines Fahrerhauses 4 auf, das fest mit dem Tragrahmen 2 verbunden ist. In dem Fahrerhaus 4 ist ein Fahrerplatz für einen Fahrer des Kettenfahrzeugs 1 untergebracht, von dem aus die Antriebshydraulik und die Arbeitshydraulik des Kettenfahrzeugs 1 steuerbar sind.

Die beiden Kettenlaufwerke 3 auf den gegenüberliegenden Seiten des Tragrahmens 2 sind spiegelsymmetrisch relativ zu einer vertikalen Fahrzeugmittellängsebene, im Übrigen jedoch identisch zueinander ausgeführt. Nachfolgend wird die - in normaler Fahrtrichtung gesehen - linke Seite und demzufolge das linke Kettenlaufwerk 3 näher beschrieben. Für das rechte Kettenlaufwerk gilt das Gesagte in analoger Weise.

Das Kettenlaufwerk 3 weist eine umlaufende Kettenanordnung 5 auf, die frontseitig über ein Spannrad 6 und rückseitig über ein auch als Turasrad bezeichnetes Antriebsrad 9 umgelenkt ist. Die Kettenanordnung 5 wird zudem über ihre Länge gestützt über fünf Laufräder 7, 8. Die fünf Laufräder 7, 8 weisen Laufradachsen 14, 20, 21 (Fig. 2) auf, die in einer gemeinsamen Ebene angeordnet sind. Das Spannrad 6 und das Antriebsrad 9 sind gegenüber dieser Ebene in Fahrzeughochrichtung nach oben versetzt, wie der Fig. 1 zu entnehmen ist. Hierdurch ergibt sich ein trapezartiges Kettenlaufwerk 3. Das Antriebsrad 9 ist relativ zum Tragrahmen 2 stationär drehbar gelagert. Das Spannrad 6 wie auch die Laufräder 7 und 8 hingegen sind relativ zum Tragrahmen 2 in Fahrzeughochrichtung und in Fahrzeuglängsrichtung begrenzt verlagerbar angeordnet. Das frontseitige Spannrad 6 ist als Stern- oder Nockenrad ausgeführt analog dem rückseitigen Antriebsrad 9, um eine schlupffreie Umlenkung der Kettenanordnung 5 auch im Bereich des Spannrads 6 zu ermöglichen. Eine in Umfangsrichtung des Spannrads 6 gesehene Teilung der radial nach außen ragenden Sternspitzen oder Nocken entspricht einer Teilung entsprechender Kettenstege der Kettenanordnung 5, so dass Spurbügel der Kettenstege zwischen den Nocken oder Sternspitzen bei der Umlenkung der Kettenanordnung 5 mitgenommen werden. Das Spannrad 6 ist um eine Spannradachse 13 drehbar gelagert an einem Spannradlenker S. Der Spannradlenker S ist um eine Spannradachse 12, d.h. eine erste Schwenkachse, schwenkbeweglich an dem Tragrahmen 2 gelagert. Sowohl die Spannradachse 12 als auch die Drehachse 13, die eine erste Drehachse darstellt, sind parallel zueinander und damit in Fahrzeugquerrichtung erstreckt. Der Spannradlenker S bildet einen radial zur Spannradachse 12 nach unten erstreckten Lenkerarm, an dem die Drehachse 13 für das Spannrad 6 angeordnet ist.

Das zu dem Spannrad 6 benachbarte Laufrad 7 ist um eine zweite Drehachse 14, d.h. eine Laufraddrehachse, drehbar an einem Laufradlenker L gelagert, der um eine zweite Schwenkachse 22 an dem Tragrahmen 2 schwenkbeweglich gelagert ist. Der Laufradlenker L ragt von der zweiten Schwenkachse 22 aus in der Stellung gemäß Fig. 2 schräg nach hinten und nach unten ab. Der Laufradlenker L bildet einen Lenkerarm, an dessen freiem Ende die zweite Drehachse 14 angeordnet ist, auf der das Laufrad 7 drehbar gelagert ist. Ein Abstand der zweiten Drehachse 14 relativ zu der fahrzeugfesten zweiten Schwenkachse 22 ist größer als ein radialer Abstand der ersten Drehachse 13 relativ zur ersten, fahrzeugfesten Schwenkachse 12 des Spannradlenkers S.

Der Laufradlenker L weist relativ zur stationären Schwenkachse 22 gegenüberliegend zu der zweiten Drehachse 14 einen nicht näher bezeichneten Hebelfortsatz auf, der entgegengesetzt zu dem Lenkerarm des Laufradlenkers L abragt und einstückig mit dem Lenkerarm verbunden ist. An dem Hebelfortsatz greift ein Gelenkpunkt 17 eines Linearstellglieds 15 in Form eines hydraulischen Stellzylinders an. Das Linearstellglied 15 weist an seinem gegenüberliegenden Stirnendbereich einen weiteren Gelenkpunkt 16 auf, der an dem Lenkerarm des Spannradlenkers S in geringem radialem Abstand zu der Drehachse 13 angreift. Dabei weist der Spannradlenker S an seinem Lenkerarm einen über die Drehachse 13 radial in Verlängerung nach außen erstreckten Hebelfortsatz auf, der einstückiger Teil des Lenkerarms des Spannradlenkers S ist. Die durch den Gelenkpunkt 16 gebildete Gelenkachse ist somit relativ zu der ersten Schwenkachse 22 gegenüber der Drehachse 13 weiter radial nach außen versetzt. Zwischen der Schwenkachse 12 des Spannradlenkers S, dem Gelenkpunkt 16, dem Gelenkpunkt 17 und der Schwenkachse 22 des Laufradlenkers L ergibt sich demzufolge ein Viergelenk, das nach Art einer Kniehebelanordnung wirksam ist. Denn abhängig von einer Verstellung des Linearstellglieds 15, d.h. von einer Verstellung des Stellkolbens des hydraulischen Stellzylinders, verändert sich der Abstand der Gelenkpunkte 16 und 17 zueinander, wodurch zwangsläufig Verstellungen der Winkel des Spannradlenkers S und des Laufradlenkers L relativ zueinander und relativ zu dem Tragrahmen 2 erfolgen. Hierdurch ergibt sich zwangsläufig eine Veränderung der Führung der Kettenanordnung 5 im Bereich der Umlenkung um das Spannrad 6 und das Laufrad 7. Eine Verschwenkung des Spannradlenkers S durch entsprechende Verstellung des Linearstellglieds 15 ist zwangsläufig mit einer Schwenkverstellung des Laufradlenkers L gekoppelt, wobei sich aufgrund der unterschiedlichen Hebelverhältnisse zwischen der ersten Schwenkachse 12 und dem Gelenkpunkt 16 einerseits und der zweiten Schwenkachse 22 und dem Gelenkpunkt 17 andererseits unterschiedliche Verstellfunktionen ergeben. Die Ansteuerung des Linearstellglieds 15 erfolgt über die Fahrzeughydraulik und kann vom Fahrerplatz des Fahrerhauses 4 aus sowohl im Stillstand als auch während des Fahrbetriebs des Kettenfahrzeugs 1 vorgenommen werden.

Die vier hinter dem ersten Laufrad 7 folgenden Laufräder 8 des Kettenlaufwerks 3 sind paarweise zusammengefasst zu zwei Laufradpaaren, wobei jeweils zwei Laufräder 8 eines Laufradpaars in nachfolgend näher beschriebener Weise gemeinsam gelagert sind. Nachfolgend wird lediglich die Lagerung des zu dem Laufrad 7 benachbarten Laufradpaars (Fig. 2) näher beschrieben. Für das hintere Laufradpaar 8, an das das Antriebsrad 9 anschließt, gilt das zu Fig. 2 Gesagte in analoger Weise.

Die beiden Laufräder 8 des Laufradpaars sind an jeweils einem Laufradlenker 18, 19 um jeweils eine Drehachse 20, 21 drehbar gelagert. Die Laufradlenker 18, 19 sind im Wesentlichen identisch zueinander ausgeführt, ragen jedoch entgegengerichtet zueinander ab. Beide Laufradlenker 18, 19 sind um eine gemeinsame, dritte Schwenkachse 20 schwenkbeweglich gelagert, so dass die beiden Laufradlenker 18, 19 koaxial zueinander an dem Tragrahmen 2 gelagert sind. Jeder Laufradlenker 18 ragt radial zu der gemeinsamen Schwenkachse 20 von einer entsprechenden fahrzeugfesten Schwenklagerung am Tragrahmen 2 aus ab. Dabei ragt der vordere Laufradlenker 18 schräg nach vorne und nach unten, wohingegen der hintere Laufradlenker 19 spiegelsymmetrisch zu einer Vertikalen in der Zeichnungsebene gemäß Fig. 2 schräg nach hinten und nach unten abragt, jeweils auf eine normale Fahrtrichtung des Kettenfahrzeugs 1 bezogen. Die beiden Laufradlenker 18, 19 sind als Hebelarme ausgeführt, wobei die Drehachsen 20 und 21 für die beiden Laufräder 8 in gleichen Abständen zu der gemeinsamen Schwenkachse 20 an freien Stirnendbereichen der Laufradlenker 18, 19 angeordnet sind. Die beiden Laufradlenker 18, 19 sind in einer Ausgangslage gemäß Fig. 2 nach unten, d.h. aufeinander zu, relativ zueinander abgestützt, wohingegen die beiden Laufradlenker 18, 19 jeweils nach oben relativ zueinander unabhängig schwenkbeweglich sind. Dazu ist jeder Laufradlenker 18, 19 auf der gemeinsamen Schwenkachse 20 unabhängig von dem jeweils anderen Laufradlenker 18, 19 schwenkbeweglich gelagert. Eine Begrenzung der relativen Schwenkbeweglichkeit der beiden Laufradlenker 18, 19 nach unten erfolgt durch entsprechende Anschläge an beiden Laufradlenkern 18, 19, die in der Ausgangslage gemäß Fig. 2 miteinander in Anlage und demzufolge in Wirkverbindung sind. Die beiden Laufradlenker 18, 19 sind zusätzlich zu ihrer unabhängigen Schwenkbeweglichkeit gemeinsam pendelnd um die dritte Schwenkachse 20 schwenkbeweglich gelagert. Hierzu ist den beiden Laufradlenkern 18, 19 eine nicht näher dargestellte Federeinrichtung zugeordnet, die nicht am Tragrahmen 2, sondern ausschließlich an den beiden Laufradlenkern 18, 19 abgestützt ist. Die Federeinrichtung ist als Drehstabfeder ausgeführt, die die beiden Laufradlenker 18, 19 derart gegensinnig drehmomentbeaufschlagt, dass die beiden Laufradlenker 18, 19 mit ihren Anschlägen in der Ausgangslage, d.h. in der winkligen Ausrichtung analog Fig. 2, gegeneinander gedrückt gehalten werden. Jeder der beiden Laufradlenker 18, 19 kann im Fahrbetrieb gegen eine Rückstellkraft der Drehstabfeder relativ zum anderen Laufradlenker 18, 19 in Drehrichtung um die Schwenkachse 20 ausgelenkt werden. Die Drehstabfeder stellt sicher, dass beide Laufradlenker 18, 19 in unbelastetem Zustand wieder in die Ausgangslage zurückgedreht werden. Ergänzend zu der relativen Schwenkbeweglichkeit der beiden Laufradlenker 18, 19 relativ zueinander können die beiden Laufradlenker 18, 19 als Lenkereinheit in der aneinander anliegenden Ausgangslage um die Schwenkachse 20 pendeln. Dieses Pendeln erfolgt demzufolge relativ zur Schwenkachse 20 immer gleichsinnig, wohingegen die Relativbewegungen der Laufradlenker 18, 19 relativ zueinander aus der Ausgangslage heraus gegensinnig erfolgen.

Im Fahrbetrieb des Kettenfahrzeugs 1 ergibt sich somit durch die beiden Kettenlaufwerke 3 eine große Laufruhe auch auf unebenem Gelände sowie ein relativ hoher Fahrkomfort, wodurch das Kettenfahrzeug 1 relativ hohe Fahrgeschwindigkeiten von vorzugsweise etwa 25 km/h erreichen kann.

Hinter dem Fahrerhaus 4 ist auf dem Tragrahmen 2 ein Aufbaurahmen 10 angeordnet, der um eine Kippachse 11 relativ zu einem heckseitigen Endbereich des Tragrahmens 2 kippbeweglich gelagert ist. Die Kippachse 11 erstreckt sich in Fahrzeugquerrichtung, so dass der Aufbaurahmen 10 gemäß der gestrichelten Darstellung schräg nach oben und nach hinten aufgestellt werden kann, um insbesondere Wartungs- oder Reparaturarbeiten an der Fahrzeughydraulik oder an anderen Funktionskomponenten innerhalb des Tragrahmens 2 zu ermöglichen. Der Aufbaurahmen 10 kann mittels wenigstens eines Stützelements in der gestrichelt dargestellten Kippstellung gesichert sein. Zudem sind dem Aufbaurahmen 10 nicht näher dargestellte Verriegelungselemente zugeordnet, die den Aufbaurahmen 10 in seiner nach unten abgesenkten Funktionslage relativ zu dem Tragrahmen 2 sichern, in der der Aufbaurahmen 10 parallel zum Tragrahmen 2 ausgerichtet ist.

## Patentansprüche

1. Kettenlaufwerk (3) für ein Kettenfahrwerk eines zivilen Kettenfahrzeugs (1) mit einer Kettenanordnung (5), die umlaufend über ein endseitiges Antriebsrad (9), ein gegenüberliegendes Spannrad (6) sowie über mehrere Laufräder (7, 8) geführt ist, wobei eine Spannradaufhängung und eine zu der Spannradaufhängung benachbarte Laufradaufhängung mittels einer Koppelmechanik miteinander in Wirkverbindung sind, **dadurch gekennzeichnet, dass** die Spannradaufhängung und die Laufradaufhängung jeweils eine eigene Schwenkachse (12, 22) aufweisen, die zueinander beabstandet sind.

2. Kettenlaufwerk nach Anspruch 1, **dadurch gekennzeichnet, dass** die Koppelmechanik eine verstellbare Spanneinrichtung aufweist.

3. Kettenlaufwerk nach Anspruch 2, **dadurch gekennzeichnet, dass** die Spannradaufhängung einen Spannradlenker (S) aufweist, der um eine erste Schwenkachse (12) schwenkbeweglich gelagert ist und an dem das Spannrad (6) in Abstand zu der Schwenkachse (12) um eine parallele erste Drehachse (13) drehbar gelagert ist, dass die Laufradaufhängung einen Laufradlenker (L) aufweist, der um eine zu der ersten Schwenkachse (12) des Spannradlenkers (S) parallele zweite Schwenkachse (22) schwenkbeweglich gelagert ist, wobei das Laufrad (7) an dem Laufradlenker (L) in Abstand zu der zweiten Schwenkachse (22) um eine parallele zweite Drehachse (14) drehbar gelagert ist, und dass die Spanneinrichtung ein Linearstellglied (15) aufweist, das an dem Spannradlenker (S) einerseits und an dem Laufradlenker (L) andererseits in Gelenkpunkten (16, 17) angreift, die zu den ersten und zweiten Schwenkachsen (12, 22) beabstandet sind.

4. Kettenlaufwerk nach Anspruch 3, **dadurch gekennzeichnet, dass** die Gelenkpunkte (16, 17) zu den ersten und zweiten Drehachsen (13, 14) des Spannrads (6) und des Laufrads (7) beabstandet sind.

5. Kettenlaufwerk nach Anspruch 3, **dadurch gekennzeichnet, dass** das Linearstellglied (15) als hydraulischer Stellzylinder gestaltet ist.

6. Kettenlaufwerk nach einem der vorhergehenden Ansprüche, **dadurch gekennzeichnet, dass** der Gelenkpunkt (17) des Laufradlenkers (L) an einem Hebelfortsatz vorgesehen ist, der entgegengesetzt zu einem Hebelarm für das Laufrad (7) relativ zu der zweiten Schwenkachse (22) des Laufradlenkers (L) abragt.

7. Kettenlaufwerk nach einem der vorhergehenden Ansprüche, **dadurch gekennzeichnet, dass** der Gelenkpunkt (16) des Spannradlenkers (S) an einem Hebelfortsatz angreift, der in Verlängerung eines Hebelarms für das Spannrad (6) vorgesehen ist.

8. Kettenlaufwerk nach einem der vorhergehenden Ansprüche, **dadurch gekennzeichnet, dass** das Linearstellglied (15) und der Spannradlenker (S) oder der Laufradlenker (L) zusammen mit der ersten oder der zweiten Schwenkachse (12, 22) eine Kniehebelanordnung bilden.

9. Kettenlaufwerk nach einem der vorhergehenden Ansprüche, **dadurch gekennzeichnet, dass** wenigstens vier weitere Laufräder (8) vorgesehen sind, die jeweils paarweise aufgehängt sind über zwei um eine gemeinsame dritte Schwenkachse (20) koaxial schwenkbeweglich gelagerte Laufradlenker (18, 19), die relativ zueinander begrenzt schwenkbeweglich sind.

10. Kettenlaufwerk nach Anspruch 9, **dadurch gekennzeichnet, dass** die beiden Laufradlenker (18, 19) jedes Laufradpaars mittels einer Federeinrichtung gegensinnig zueinander drehmomentbeaufschlagt sind.

11. Kettenlaufwerk nach Anspruch 9 oder 10, **dadurch gekennzeichnet, dass** die beiden Laufradlenker (18, 19) jedes Laufradpaars in einer Ausgangslage drehschlüssig relativ zueinander abgestützt sind, und dass die beiden Laufradlenker (18, 19) in dieser Ausgangslage gemeinsam pendelfähig um die dritte Schwenkachse (20) gelagert sind.

12. Kettenlaufwerk nach Anspruch 10 oder 11, **dadurch gekennzeichnet, dass** die Federeinrichtung mit den beiden Laufradlenkern (18, 19) in Wirkverbindung steht und Relativbewegungen zwischen den Laufradlenkern (18, 19) aus der Ausgangslage heraus federelastisch ausgleicht.

13. Kettenlaufwerk nach Anspruch 12, **dadurch gekennzeichnet, dass** die Federeinrichtung als Drehstabfeder ausgeführt ist, die relativ zu den beiden Laufradlenkern (18, 19) abgestützt ist.

14. Ziviles Kettenfahrzeug (1) mit einem Tragrahmen (2) sowie mit einem Kettenfahrwerk, das auf gegenüberliegenden Seiten des Tragrahmens (2) jeweils ein Kettenlaufwerk (3) gemäß einem der vorhergehenden Ansprüche aufweist.

15. Ziviles Kettenfahrzeug nach Anspruch 14, **dadurch gekennzeichnet, dass** jedes Kettenlaufwerk (3) zwei in Fahrzeuglängsrichtung zueinander beabstandete Laufradpaare (8) aufweist.

16. Ziviles Kettenfahrzeug nach Anspruch 14 oder 15, mit einem frontseitig auf dem Tragrahmen (2) angeordneten Fahrerhaus (4), **dadurch gekennzeichnet, dass** auf dem Tragrahmen (2) hinter dem Fahrerhaus (4) ein Aufbaurahmen (10) angeordnet ist, der um wenigstens eine Kippachse (11) kippbar relativ zu dem Tragrahmen (2) gelagert ist.
